# EUROPÄISCHE PATENTANMELDUNG

(11) **EP 3 106 290 A1**
(43) Veröffentlichungstag der Anmeldung: **21.12.2016**
(21) Anmeldenummer: 15172646.0
(22) Anmeldetag: 18.06.2015
(51) Int. Cl.: B29C 70/32, B29D 99/00, B29C 67/00, B29C 47/64

(54) **VERFAHREN UND VORRICHTUNG ZUM AUFTRAGEN EINES WERKSTOFFES, STEUEREINRICHTUNG, 3D-DRUCKKOPF, 3D-DRUCKER UND WERKZEUGMASCHINE**

(71) Anmelder: Siemens Aktiengesellschaft, 80333 München (DE)
(72) Erfinder: Jähnicke, Jens, 09112 Chemnitz (DE)

(57) **Zusammenfassung**

Zusammenfassend betrifft die Erfindung ein Verfahren und eine Vorrichtung zum Auftragen eines Werkstoffs (2). Weiter Betrifft die Erfindung einen 3D-Drucker, einen 3D-Druckkopf, eine Werkzeugmaschine sowie eine Steuereinrichtung für eine solche Vorrichtung. Mittels einem Heizelement 5 wird ein (der Bewegung des 3D-Druckkopfes bzw. Extruders (1) vorgelagerter Bereich (B1) lokal erwärmt. Mit einem Kühlelement (6), insbesondere einem Führungselement (6a), wird der aufgetragene Werkstoff (2) sowie ggf. die Fläche (3) wieder abgekühlt. Das Heizelement (5) und/oder das Kühlelement (6) sind vorteilhaft in der Bewegungsrichtung (v) des Extruders (1) angeordnet. Vorteilhaft ist eine hier gezeigte Vorrichtung, insbesondere ein Druckkopfes oder Extruder (1), dafür vorgesehen, dreidimensionale Körper aus Metall herzustellen.

## Beschreibung

Die Erfindung betrifft ein Verfahren und eine Vorrichtung zum Auftragen eines Werkstoffes, eine Steuereinrichtung, ein 3D-Druckkopf, einen 3D-Drucker sowie eine Werkzeugmaschine.

Gemäß derzeitigem Stand der Technik wird bei der Erstellung eines dreidimensionalen Werkstückes mittels des Fused-Deposition-Modelling-Verfahrens wird mit Hilfe eines Extruders ein geschmolzener Kunststoff auf eine Fläche aufgebracht. Dort kühlt der Kunststoff ab und verbindet (verklebt) derweil mit der Fläche. Daraus entsteht durch Beaufschlagung des Werkstoffes das dreidimensionale Werkstück.

Nachteilig am dieser Vorgehensweise ist die mangelnde Festigkeit des Werkstücks, insbesondere durch gegebenenfalls auftretende Lufteinschlüsse durch unterbrochene Kontaktflächen des aufgetragenen Werkstückes an seinen Berührbereichen.

Daher ist es Aufgabe der Erfindung, die Haftung des Werkstoffes mit der aufgetragenen Fläche zu verbessern und somit die Festigkeit des entstehenden Werkstückes zu erhöhen.

Im Folgenden werden "Vorrichtung zum Auftragen eines Werkstoffes" und "3D-Druckkopf" synonym verwendet. Ein Extruder bezeichnet den Teil der Vorrichtung, aus dem der Werkstoff auf die Fläche (d. i. ein Untergrund und/oder ein Werkstück) aufgetragen wird. Ein 3D-Druckkopf weist für gewöhnlich weitere Elemente als den reinen Extruder auf.

Diese Aufgabe wird durch ein Verfahren nach Anspruch 1 gelöst.

Diese Aufgabe wird weiter durch eine Vorrichtung nach Anspruch 8 gelöst

Die Aufgabe wird weiter durch eine Steuereinrichtung gemäß Anspruch 13, einen 3D-Druckkopf gemäß Anspruch 15, einen 3D-Drucker gemäß Anspruch 16 sowie durch eine Werkzeugmaschine oder durch eine Produktionsmaschine gemäß Anspruch 17 gelöst.

Der Extruder weist vorteilhaft einen Auslass auf. Der Auslass ist an der Seite des Extruders angeordnet, die zu der Fläche zeigt und dient zum Auslass des Werkstoffs aus dem Extruder. Der Auslass ist eine Öffnung des Extruders, aus dem der Werkstoff aus dem Extruder austritt.

Der Extruder ist zum Auftragen eines erwärmten und dadurch verflüssigten Werkstoffes vorgesehen. Der Extruder ist vorteilhaft Teil eines 3D-Druckkopfes. Der Extruder wird mit Hilfe eines Antriebverbundes über die Fläche geführt. Derweil der Extruder über die Fläche geführt wird, strömt zumindest zeitweise, (vorzugsweise verflüssigter) Werkstoff durch den Auslass des Extruders auf die Fläche. Durch den Kontakt mit der Fläche erhöht der Werkstoff nach kurzer Zeit seine Festigkeit, insbesondere durch Abkühlen/Erstarren. Der auf die Fläche aufgetragene Werkstoff verbindet sich, zumindest bereichsweise, mit der Fläche. Durch eine Erwärmung mit Hilfe des Heizelements wird die Fläche im vorgelagerten Bereich geheizt. Die Heizung des vorgelagerten Bereichs dient zur verbesserten Verbindung der Fläche mit dem Werkstoff.

Es ist beispielswiese vorteilhaft die Fläche dergestalt zu erwärmen, so dass der Werkstoff, der zumindest zum Teil die Fläche bildet, an seiner Oberfläche schmilzt. Beim Auftragen des, insbesondere geschmolzenen, Werkstoffes mit Hilfe des Extruders ist eine verbesserte Verbindung der (geschmolzenen) Werkstoffe untereinander möglich.

In einem nachgelagerten Bereich kann der aufgetragene Werkstoff mit Hilfe eines Kühlelements, insbesondere auf Raumtemperatur, abgekühlt werden. Mit dem Kühlelement werden der Werkstoff und/oder die Fläche auf eine vorbestimmte Temperatur eingestellt. Die Kühlung erfolgt nach dem Auftragen des Werkstoffes auf die Fläche bzw. auf das Werkstück.

Unter einer Fläche versteht man einen Bereich des Untergrundes für das Werkstück und/oder einer Oberfläche des Werkstücks, welcher zumindest bereichsweise mit dem Werkstoff beaufschlagt wird. Auf die Fläche wird der Werkstoff mit Hilfe des Extruders aufgebracht.

Die Fläche kann der Bereich des Untergrundes sein, der mit Hilfe des Extruders mit dem Werkstoff beaufschlagt wird, wobei eine erste Lage des Werkstoffs auf den Untergrund aufgetragen wird und die weiteren Lagen des Werkstoffs auf das (sich ausbildende) Werkstück selbst.

Unter einer Erwärmung wird hier eine Veränderung der Temperatur der Umgebung desjenigen Bereichs der Fläche verstanden, auf dem der Werkstoff auf die Fläche trifft, nachdem der den Extruder verlassen hat. Erwärmt wird insbesondere der vorgelagerte Bereich.

Sofern der Extruder sich in eine Bewegungsrichtung bewegt, ist die Fläche in einen (der Bewegung des Extruders) vorgelagerten Bereich und einen (der Bewegung) nachgelagerten Bereich einteilbar. Vorteilbar erstrecken sich der vorgelagerte Bereich und der nachgelagerte Bereich kreissektorenförmig um den Punkt herum, bei dem der Werkstoff aus dem Extruder auf die Fläche auftrifft.

Der vorgelagerte Bereich ist der Bereich, der mit erwärmt wird und der nachgelagerte Bereich ist der Bereich, der gekühlt wird. Die Form des vorgelagerten Bereiches und/oder des nachgelagerten Bereichs hängt vom Material und/oder von der Art des Erwärmens/des Kühlens ab.

Dabei können der vorgelagerte Bereich und der nachgelagerte Bereich eine Fläche von etwa 1 mm² bis 100 mm² aufweisen. Die Kreissektor-förmigen Bereiche weisen vorteilhaft einen spitzen Winkel auf, wobei die Bewegungsrichtung etwa entlang der Winkel-halbierenden Richtung verläuft.

Als Werkstoff eignen sich ein schmelzbarer Kunststoff, ein Harz, ein Metall bzw. eine metallische Legierung, sowie ein Polymer mit eingelagerten Fasern. Vorteilhaft weisen die geeigneten Metalle bzw. Legierungen (Zinn, Blei, Gallium, Aluminium) einen niedrigen Schmelzpunkt auf.

Vorteilhaft haften die Werkstoffe nach dem Auftragen auf dem Werkstoff aneinander. Durch das Erwärmen wird der Werkstoff auf der Fläche an seiner Oberfläche geschmolzen. Der ebenfalls geschmolzene Werkstoff verbindet sich dann mit der Fläche deutlich besser. Bei einem Untergrund, der erwärmt worden ist, sinkt vorteilhaft die Oberflächenspannung des aufgebrachten geschmolzenen Werkstoffs - so dass sich auch hier eine verbesserte Haftung und Form des aufgetragenen Werkstoffs ergibt.

Oft verläuft die Verfahrbewegung des Extruders in einer geschlossenen Kurve ohne einen unstetigen Verlauf der Bewegung des Extruders. Somit ist die Ausrichtung des (der Verfahrbewegung) vorgelagerten Bereichs und/oder des nachgelagerten Bereichs nicht sprunghaft veränderlich.

Bei einer Richtungsänderung der Verfahrbewegung des Extruders (z. B. einem Vor- und Zurückfahren) ist es vorteilhaft, dass die Positionen des Heizelements und/oder des Kühlelements an dem Extruder veränderlich ist oder ein Heizelement auch zur Kühlung (sowie ein Kühlelement zur Heizung) eingesetzt werden kann.

Dies ist besonders einfach mit einem Gebläse für warme und kalte Luft möglich.

Unter einem Heizelement wird ein Element verstanden, welches eine vorgegebene Fläche, insbesondere bereichsweise, erwärmen kann. Unter einem Kühlelement wird ein Element verstanden, das eine vorgegebene Fläche bzw. ein sich auf der Fläche befindlichen Werkstoff, insbesondere bereichsweise, kühlen oder entwärmen kann.

Vorteilhaft dient das Heizelement zur Erwärmung der Fläche im vorgelagerten Bereich. Vorteilhaft dient das Kühlelement der Kühlung der Fläche und/oder des Werkstoffes im nachgelagerten Bereich.

Der Wirkbereich des Kühlelements und/oder des Heizelements ist ein kreissektorförmiger Bereich der Fläche.

Das Führungselement kann auch ein Körper sein, der über den Werkstoff gleitet, der auf die Fläche aufgetragen worden ist. Dabei ist das Führungselement vorteilhaft zur Aufnahme von Wärmeenergie aus dem ausgetragenen Werkstoff geeignet. Somit führt das Führungselement die Wärmeenergie des Werkstücks bzw. des Werkstoffes nach der Auftragung ab.

Vorteilhaft dient das Führungselement auch zur Verformen des aufgetragenen Werkstoffes, beispielsweise um Lufteinschlüsse zu vermindern oder bei Werkstoffen hoher Oberflächenspannung im flüssigen Bereich, zur verbesserten Haftung an der Fläche.

Besonders vorteilhaft ist ein Führungselement beim Einsatz von metallischen Werkstoffen.

Das Führungselement kann mit Hilfe eines Peltierelements die aufgenommene Wärme an ein weiteres Bauteil, z.B. den Extruder, abgeben. Hierbei ist das Peltierelement vorteilhaft zwischen dem Führungselement und dem Extruder lokalisiert oder Teil des Führungselements.

Weist das Führungselement eine elektrische Heizung auf, so kann es zur Erwärmung der Fläche dienen, auf die der Werkstoff mit Hilfe des Extruders aufgebracht wird.

In einer vorteilhaften Ausgestaltung des Verfahrens erstrecken sich der vorgelagerte Bereich und der nachgelagerte Bereich entlang der Bewegungsrichtung des Extruders, insbesondere kreissektorförmig.

Die Bewegungsrichtung wird durch die Translationsbewegung des Extruders über der Fläche vorgegeben. Der vorgelagerte Bereich ist demnach der Bereich, der von dem Extruder nachfolgend überfahren wird. Der nachgelagerte Bereich ist der Bereich, über den sich der Extruder bereits hinwegbewegt hat. Diese Bereiche sind in ihrer Ausdehnung vorteilhaft einige mm². Besonders vorteilhaft sind diese Kreissektor-förmig geformt. Durch diese Ausführung der Bereiche, die erwärmt oder gekühlt werden, ist eine optimale Nutzung der Wärme beziehungswiese der Kühlung möglich.

In einer weiteren vorteilhaften Ausgestaltung erfolgt ein Erwärmen der Fläche im vorgelagerten Bereich durch Induktion und/oder durch Einstrahlung von Licht, insbesondere Licht in einem infraroten Wellenlängenbereich, oder durch ein Gebläse.

Im vorgelagerten Bereich der Fläche wird die Fläche, beziehungswiese die Luft oberhalb der Fläche mit Hilfe einer Heizung erwärmt. Als Heizung eignen sich Wärmestrahler, Mikrowellen, IR-Lampen oder konventionelle Heizgebläse. Durch die Heizung wird die Fläche vor dem Auftragen des Werkstoffs erwärmt. So kann der Werkstoff aus dem Extruder vorteilhaft eine festere Verbindung mit der Auflage oder dem erwärmten (unfertigen) Werkstück eingehen.

Weiter kann auch ein beheiztes Führungselement zur Erwärmung der Fläche dienen.

Besonders vorteilhaft ist zwischen dem Heizelement und dem Kühlelement ein Peltierelement positioniert. So kann die Wärmeenergie aus dem Kühlelement in das Heizelement Hilfe des Peltierelements erfolgen und Energie eingespart werden.

Bei einer weiteren vorteilhaften Ausgestaltung des Verfahrens erfolgt die Kühlung des Werkstoffes und/oder der Fläche in dem nachgelagerten Bereich durch ein Gebläse und/oder Verdunstungskälte.

Nach dem Auftragen des Werkstoffs auf die Fläche werden der (aufgetragene) Werkstoff und/oder die Fläche wieder gekühlt. Zur Kühlung dient vorteilhaft das Kühlelement, wobei das Kühlelement als Gebläse oder als Sprühmechanismus für eine leichtverdampfende Flüssigkeit ausgestaltet ist. Das Kühlelement kann auch als Führungselement ausgestaltet sein, wobei das Führungselement die (überschüssige) Wärmeenergie aus dem (aufgetragenen) Werkstoff und/oder von der Fläche aufnimmt.

Durch die nachträgliche Kühlung der Fläche und/oder des aufgetragenen Werkstoffes mit Hilfe des Kühlelements, insbesondere des Führungselements, kann eine erhöhte Genauigkeit des Werkstücks erzielt werden, da ein Zerfließen des Werkstoffes wirksam vermindert wird.

Bei einer weiteren vorteilhaften Ausgestaltung des Verfahrens kühlt ein Führungselement den Werkstoff im nachgelagerten Bereich und ändert optional den (aufgetragenen) Werkstoff in seiner Form.

Ein Führungselement dient zur Abgabe und/oder Aufnahme von Wärmeenergie aus der Fläche bzw. aus dem Werkstück. Ein Führungselement weist eine Oberfläche auf, die in unmittelbarer Umgebung über die Fläche und/oder über den Werkstoff streicht bzw. geringfügig beabstandet verläuft. Besonders vorteilhaft berührt und formt bzw. kühlt das Führungselement den Werkstoff. Vorteilhaft verläuft das Führungselement von der Fläche beabstandet in Bewegungsrichtung des Extruders.

Durch ein Führungselement sind ein gleichzeitiges Glätten und/oder Verformen des aufgebrachten Werkstoffes sowie ein Entwärmen der Fläche und/oder des Werkstoffes möglich.

Vorteilhaft weist ein Führungselement eine Aussparung an der Seite auf, an der das Führungselement mit dem Werkstoff in Kontakt gerät.

Bei einer weiteren vorteilhaften Ausgestaltung des Verfahrens wird der vorgelagerte Bereich anhand von Materialvorgaben erwärmt und/oder der nachgelagerte Bereich anhand von Materialvorgaben gekühlt.

Unter Materialvorgaben wird beispielsweise die Wärmemenge für die Erwärmung der Fläche und/oder des Werkstoffs verstanden. Die Materialvorgabe ist eine Größe, die von den Eigenschaften des Werkstoffs abhängt. Weiter können die Materialvorgaben von der Art und Weise der Fertigung, Verfahrgeschwindigkeit des Extruders bzw. des Druckkopfes abhängig sein. Beispielsweise ist die zugeführte Wärmemenge (pro Zeiteinheit) von dem Heizelement von dem verwendeten Werkstoff abhängig. Weiter kann die vom Heizelement zugeführte Wärmemenge (pro Zeiteinheit) vom Material und/oder der Bauweise des Untergrundes abhängen.

Dasselbe gilt für das Kühlelement und/oder für das Führungselement. Unterschiedliche Werkstoffe werden demnach mit einem unterschiedlichen Kühlelement bzw. Führungselement behandelt.

Ebenso hängt die Größe und Form des vorgelagerten Bereichs und/oder des nachgelagerten Bereichs vom verwendeten Werkstoff und/oder dem Werkstück ab.

Bei Verwendung eines IR-Strahlers als Heizelement ist die Wellenlänge des IR-Strahlers zur Erwärmung des Werkstückes, der Fläche und/oder des Werkstoffes für unterschiedliche Werkstoffe erheblich.

Durch den Einsatz unterschiedlicher Herstellungsparameter kann auch bei schneller Durchführung des hier betrachteten Verfahrens ein qualitativ hochwertiges Werkstück hergestellt werden.

Bei einer weiteren vorteilhaften Ausgestaltung des Verfahrens wird als Werkstoff ein Metallwerkstoff, insbesondere eine Legierung, ein Kunststoff oder ein Harz verwendet.

Als Legierung kann eine Mischung von Metallen mit niedriger Schmelztemperatur eingesetzt werden, beispielsweise Aluminium, Blei, Zinn, Zink, Cadmium usw.

Als Kunststoff eignen sich Thermoplaste, insbesondere Polyolefine, Polystyrol usw.

Besonders vorteilhaft können mit diesem Verfahren Werkstücke aus Legierungen wie einer Aluminium-Blei-Legierung hergestellt werden.

Für ein besonders widerstandsfähiges Werkstück kann der Werkstoff Fasern wie Mineralfasern, Glasfasern, Kohlefasern, Carbon-Nanotubes usw. aufweisen.

In einer vorteilhaften Ausgestaltung der Vorrichtung ist das Heizelement zur Erwärmung eines vorgelagerten Bereichs vorgesehen, wobei das Kühlelement zur Kühlung des nachgelagerten Bereichs vorgesehen ist, wobei der vorgelagerte Bereich und der nachgelagerte Bereich sich in der vorgesehenen Bewegungsrichtung, insbesondere kreissektorförmig, erstrecken.

Im Falle einer Fläche, welche die Oberfläche eines Werkstoffs ist, ist es vorteilhaft, die Fläche, auf die der Werkstoff (durch den Extruder) aufgebracht wird, zu schmelzen, so dass der Werkstoff aus dem Auslass des Extruders auf einen noch flüssigen Werkstoff trifft. Nachteilhafte Formen des aufgetragenen Werkstoffes, insbesondere durch Auswirkungen der Oberflächenspannung des Werkstoffes, werden so wirksam verhindert.

Durch die Kühlung oder Entwärmung des aufgetragenen Werkstoffes wird eine nachträgliche unerwünschte Verformung, insbesondere ein Zerfließen des aufgetragenen Werkstoffes und/oder der Fläche, verhindert.

Durch diese Ausgestaltung ist eine höhere Genauigkeit bei der Erstellung eines Werkstoffes mit einem Fused-Deposition-Modelling- Verfahren möglich.

Bei einer weiteren vorteilhaften Ausgestaltung der Vorrichtung ist das Heizelement ein Heizgebläse, eine Lichtquelle oder eine Induktionsquelle und/oder das Kühlelement ist eine Quelle für ein Gas oder eine schnell verdampfende Flüssigkeit oder ein Führungselement.

Das Heizelement ist zum Erhöhen der Temperatur der Fläche vorgesehen, auf welcher der Werkstoff aufgebracht wird oder aufgebracht worden ist. Besonders vorteilhaft ist eine Ausführung des Heizelementes, die ohne eine Berührung des Werkstoffes oder der Fläche die Temperatur derselben verändert. So kann zur Erhöhung der Temperatur der Fläche eine Strahlungsquelle für elektromagnetische Strahlung eingesetzt werden, wobei die Strahlung durch eine Wechselwirkung mit dem Werkstoff, der unter der Fläche vorliegt, eine Erhöhung der Temperatur der Fläche hervorrufen.

Eine besonders einfache und breit einsetzbare Ausführung für ein Heizelement und/oder ein Kühlelement ist ein Gebläse oder eine Düse für ein temperiertes Gas. Eine solche Düse weist den Vorteil auf, dass sie sowohl zur Erwärmung als auch zur Kühlung eingesetzt werden kann.

Ein solches Temperierelement kann wahlwiese als Kühlelement oder als Heizelement eingesetzt werden.

Insbesondere bei einem Wechsel der Bewegungsrichtung des Extruders (z.B. abwechselndes Hin- und Herfahren) kann ein solches Temperierelement, welches als Düse für ein temperiertes Gas ausgeführt ist, in seiner Funktion hin- und herwechseln.

Beim Einsatz eines solchen Temperierelements regelt vorteilhaft eine Steuereinrichtung die Zufuhr und die Temperatur des Gases. Die Steuereinrichtung regelt die Temperatur und die Menge des ausströmenden Gases vorteilhaft anhand der Bewegungsvorgaben für den Extruder.

Zur Kühlung kann dem Gas auch eine leichtverdunstende Flüssigkeit (Alkohol, Wasser, Lösemittel) beigegeben werden. Durch die Verdunstung der Flüssigkeit wird der Umgebung Wärme entzogen und die Fläche und/oder der (aufgetragene) Werkstoff gekühlt.

Bei einer vorteilhaften Ausgestaltung der Vorrichtung sind das Heizelement und/oder das Kühlelement am Extruder bewegbar, insbesondere an der Bewegungsrichtung des Extruders ausrichtbar. Bei einer Richtungsänderung der Bewegungsrichtung des Extruders, insbesondere parallel zur Fläche, ist es vorteilhaft, dass sich der vorgelagerte Bereich und/oder der nachgelagerte Bereich in ihrer Ausrichtung an die Bewegungsrichtung des Extruders anpassen. So ist der vorgelagerte Bereich der Fläche nach der Erwärmung auch mit dem Werkstoff beaufschlagt.

Technisch können das Heizelement und/oder das Kühlelement mit Hilfe einer Positionierungseinrichtung in ihrer Position an dem Extruder ausgerichtet werden. Gleichfalls kann auch die Fläche bzw. das Werkstück in seiner Ausrichtung verändert werden. Somit findet vorteilhaft eine "echte 6-Achsen-Bewegung" statt.

Bei einer vorteilhaften Ausgestaltung der Steuereinrichtung ist die Steuereinrichtung Teil einer übergeordneten Steuereinrichtung, insbesondere für eine Werkzeugmaschine. Besonders vorteilhaft bei einer solchen Ausführung ist die einfache Integration eine Steuereinrichtung in die (Gesamt-) Steuereinrichtung eines 3D-Druckers, der Werkzeugmaschine oder einer Produktionsmaschine.

Vorteilhafte Anwendungsgebiete der Erfindung sind mithin eine Werkzeugmaschine mit einer additiven Fertigungseinheit, insbesondere ein 3D-Druckkopf, ein 3D-Druckkopf einer Produktionsmaschine sowie eine Maschine für die additive Fertigung.

Im Folgenden wird die Erfindung anhand von Figuren näher erläutert. Daher entsprechen die gezeigte Figuren Ausführungsformen der Erfindung. Die Merkmale, die in den Figuren gezeigt sind, können durch den Fachmann zu neuen Ausführungsbeispielen zusammengefügt werden, ohne die grundlegende Idee der Erfindung zu verlassen. Es zeigen
FIG 1 den Betrieb eines Extruders,
FIG 2 die Anordnung von Bereichen,
FIG 3 einen Aufbau eines Extruders sowie
FIG 4 einen Extruder mit einem Führungselement.

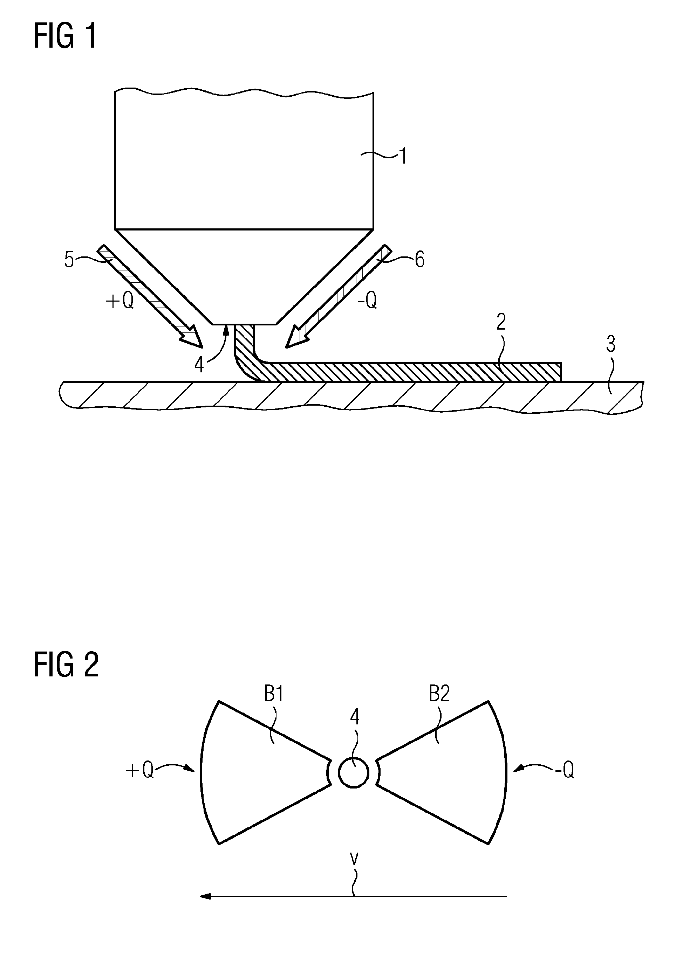

FIG 1 zeigt den Betrieb eines Extruders 1, der aus seinem Auslass einen Werkstoff 2 auf eine Fläche 3 aufbringt. Mit einem Heizelement 5 wird die Fläche 3 im Bereich nahe des Extruders 1 erwärmt. Die Erwärmung wird in der Figur mit "+Q" gekennzeichnet. Weiter wird auch der Raumbereich nahe der Fläche 3 erwärmt. Mit einem Kühlelement 6 wird der Bereich, in dem die Fläche 3 mit dem Werkstoff 2 beaufschlagt worden ist, sowie der Werkstoff 2 gekühlt. Der Entzug von Wärmeenergie wird in der Figur durch "-Q" gekennzeichnet. In dieser Ausführungsform kann mit dem Heizelement 5 die Fläche 3, auf die der Werkstoff 2 mittels des Extruders aufgetragen wird, an der Oberfläche geschmolzen werden. Mit dem Kühlelement 6 wird der aufgetragene Werkstoff 2 sowie die Oberfläche der Fläche 3 entwärmt bzw. gekühlt und somit wieder verfestigt. Bei der Erwärmung wird die Fläche 3 mit einer bestimmten Menge Wärmeenergie (mit "Q" bezeichnet) beaufschlagt. Mit Hilfe der Kühleinrichtung 5 wird der Fläche 3 und/oder dem (aufgetragenen) Werkstoff 3 wieder Wärmeenergie Q entzogen und somit gekühlt.

FIG 2 zeigt eine Anordnung von Bereichen B1, B2. Gezeigt ist der Auslass 4 des Extruders 1 von oben, wobei in der Bewegungsrichtung des Extruders 1, die durch den Pfeil v gezeigt ist, ein vorgelagerter Bereich B1 sowie demgegenüber ein nachgelagerter Bereich B2 beschrieben sind. Der vorgelagerte Bereich B1 kennzeichnet den Bereich der Fläche 3, welche mit dem Heizelement 5 erwärmt wird. Der nachgelagerte Bereich B2 kennzeichnet den Bereich der Fläche 3 bzw. des aufgetragenen Werkstoffs 2, der durch das Kühlelement 6 gekühlt wird. Vorteilhaft wird der vorgelagerte Bereich B1 der Fläche 3 nahe des Auslasses 4 erwärmt, wobei der nachgelagerte Bereich B2 in einem geringen Abstand vom Auslass 4 gekühlt wird. Die Ausrichtung des vorgelagerten Bereichs B1 und des nachgelagerten Bereichs B2 sind in ihrer Längsausrichtung der Bewegungsrichtung v des Extruders 1 parallel angeordnet. Die beiden Bereiche B1, B2 sind kreissektorförmig dargestellt, wobei die Bereiche B1, B2 selbstverständlich auch eine andere Form (und Größe) als dargestellt aufweisen können.

Beispielhaft kann das Heizelement 5 lediglich einen Punkt in der Nähe des Auslasses 4 in der, durch den Pfeil v gekennzeichneten, Bewegungsrichtung des Extruders 1 lokal erwärmen, wobei der nachgelagerte Bereich B2 einen Bereich B2 darstellt, der der Bewegungsrichtung v des Extruders 1 nachläuft.

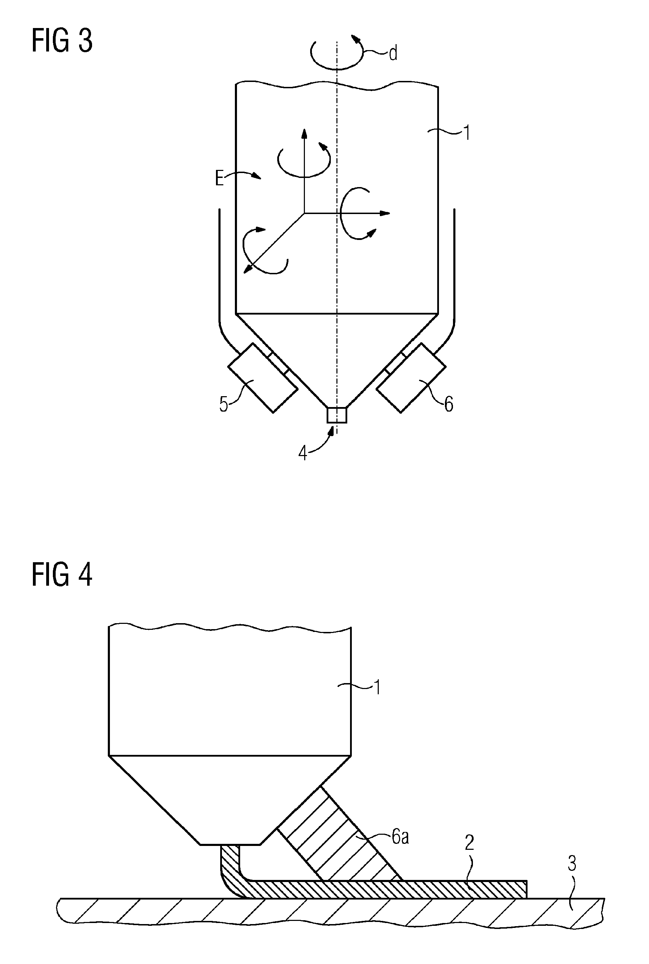

FIG 3 zeigt den Aufbau eines Extruders 1. Der Extruder 1 weist an seiner Unterseite den Auslass 4 auf. Dem Auslass in Bewegungsrichtung v vorgelagert ist an der Außenseite des Extruders 1 das Heizelement 5, z. B. ein Heizgebläse oder eine Strahlungsquelle. Auf der gegenüber liegenden Seite des Extruders 1 ist das Kühlelement 6 angeordnet. Bei dem Kühlelement 6 handelt es sich vorteilhaft um ein Gebläse für Luft oder ein gekühltes Gas. Der Extruder 1 ist vorteilhaft in seinen Raumrichtungen E drehbar. Insbesondere ist der Extruder 1 selbst um seine Achse d drehbar, so dass das Heizelement 5 und das Kühlelement 6 der Bewegungsrichtung v des Extruders in ihrer Position und/oder Ausrichtung folgen können. So sind auch die Bereiche B1, B2 in Ihrer Ausrichtung jeweils der Bewegungsrichtung v des Extruders 1 anpassbar.

FIG 4 zeigt einen Extruder 1 mit einem Führungselement 6a. Das Führungselement 6a dient vorteilhaft zur Aufnahme der Wärmeenergie Q des Werkstoffes 2, wobei der Werkstoff 2 aus dem Extruder 1 auf die Fläche 3 aufgebracht worden ist. Wie gezeigt, passt sich die äußere Form des Führungselements 6a dem aufgetragenen Werkstoff 2 vorteilhaft an, so dass das Führungselement 6a auch zur Formung des, auf die Fläche 3 aufgetragenen, Werkstoffes 6a und/oder die Fläche 3 dient. Zur Entwärmung des Führungselements 6a kann ein Peltierelement (nicht gezeigt) zwischen dem Führungselement 6a und der Oberfläche des Extruders 1 angeordnet sein, wobei der Extruder mit Hilfe des Peltierelements auf eine hierfür vorgesehene Temperatur eingestellt werden kann. Insbesondere kann das Peltierelement (hier nicht gezeigt) zur Entwärmung des Führungselements 6a und zur Übertragung der Wärmeenergie Q an den Extruder 1 dienen.

Zusammenfassend betrifft die Erfindung ein Verfahren und eine Vorrichtung zum Auftragen eines Werkstoffs 2. Weiter betrifft die Erfindung einen Druckkopf für einen 3D-Drucker, einen 3D-Drucker, eine Werkzeugmaschine sowie eine Steuereinrichtung für eine solche Vorrichtung. Mittels einem Heizelement 5 wird ein (der Bewegung des 3D-Druckkopfes) vorgelagerter Bereich B1 lokal erwärmt. Mit einem Kühlelement 6, insbesondere einem Führungselement 6a, wird der aufgetragene Werkstoff 2 sowie ggf. die Fläche 3 wieder abgekühlt. Das Heizelement 5 und/ oder das Kühlelement 6 sind vorteilhaft in der Bewegungsrichtung v des Extruders 1 angeordnet. Vorteilhaft ist eine hier gezeigte Vorrichtung, insbesondere ein Druckkopf oder Extruder 1, dafür vorgesehen, dreidimensionale Körper aus Metall herzustellen.

## Patentansprüche

1. Verfahren zum Auftragen eines Werkstoffs (2), insbesondere in einem 3D-Druckverfahren, vorzugsweise mittels einem Fused-Deposition-Modelling-Verfahren, wobei der Werkstoff (2) aus einem Extruder (1) auf eine Fläche (3) aufgebracht wird, wobei die Fläche (3) vor einem Aufbringen des Werkstoffs (2) in einem vorgelagerten Bereich (B1) erwärmt wird und/oder nach dem Aufbringen des Werkstoffs (2) der aufgebrachte Werkstoff (2) sowie die Fläche (3) in einem nachgelagerten Bereich (B2) gekühlt wird.

2. Verfahren nach Anspruch 1, wobei der vorgelagerte Bereich (B1) und der nachgelagerte Bereich (B2) sich entlang der Bewegungsrichtung (v) des Extruders (1), insbesondere kreissektorförmig, erstrecken.

3. Verfahren nach einem der vorangehenden Ansprüche, wobei ein Erwärmen der Fläche (3) im vorgelagerten Bereich (B1) durch Induktion und/oder durch Einstrahlung von Licht, insbesondere Licht in einem infraroten Wellenlängenbereich, oder durch ein Gebläse erfolgt.

4. Verfahren nach einem der vorangehenden Ansprüche, wobei die Kühlung des Werkstoffes (2) und/oder der Fläche (3) in dem nachgelagerten Bereich (B2) durch ein Gebläse und/oder Verdunstungskälte erfolgt.

5. Verfahren nach einem der vorangehenden Ansprüche, wobei ein Führungselement (6a) den Werkstoff (2) im nachgelagerten Bereich (B2) kühlt und optional in seiner Form verändert.

6. Verfahren nach einem der vorangehenden Ansprüche, wobei der vorgelagerte Bereich (B1) anhand von Materialvorgaben erwärmt wird und/oder der nachgelagerte Bereich (B2) anhand von Materialvorgaben gekühlt wird.

7. Verfahren nach einem der vorangehenden Ansprüche, wobei als Werkstoff (2) ein Metallwerkstoff, insbesondere eine Legierung, ein Kunststoff oder ein Harz verwendet wird.

8. Vorrichtung (1) zum Auftragen eines Werkstoffes (2) auf eine Fläche (3), insbesondere 3D-Druckkopf (1), aufweisend einen Extruder (1), ein Heizelement (5) für einen vorgelagerten Bereich (B1) und ein Kühlelement (6) für einen nachgelagerten Bereich (B2), wobei das Heizelement (5) zur Erwärmung einer Fläche (3) in einem vorgelagerten Bereich (B1) vorgesehen ist, wobei das Kühlelement (6) zur Kühlung des auf die Fläche (3) aufgetragenen Werkstoffes (2) im nachgelagerten Bereich (B2) vorgesehen ist.

9. Vorrichtung nach Anspruch 8, wobei das Kühlelement als Führungselement (6a) ausgebildet ist.

10. Vorrichtung (1) nach Anspruch 8, wobei das Heizelement (5) zur Erwärmung eines vorgelagerten Bereichs (B1) vorgesehen ist, wobei das Kühlelement (6) zur Kühlung des nachgelagerten Bereichs (B2) vorgesehen ist, wobei der vorgelagerte Bereich (B1) und der nachgelagerte Bereich (B2) sich in der vorgesehenen Bewegungsrichtung (v), insbesondere kreissektorförmig, erstrecken.

11. Vorrichtung nach einem der Ansprüche 8 bis 10, wobei das Heizelement (5) ein Heizgebläse, eine Lichtquelle oder eine Induktionsquelle ist und/oder das Kühlelement (6) eine Quelle für ein Gas oder eine schnell verdampfende Flüssigkeit oder ein Führungselement (6a) ist.

12. Vorrichtung nach einem der Ansprüche 8 bis 11, wobei das Heizelement (5) und/oder das Kühlelement (6) am Extruder (1) bewegbar, insbesondere an der Bewegungsrichtung (v) des Extruders (1) ausrichtbar, sind.

13. Steuereinrichtung zur Steuerung eines Verfahrens nach einem der Ansprüche 1 bis 7, aufweisend eine Schnittstelle für zumindest einen Sensor, insbesondere einen Temperatur-Sensor und/oder einen optischen Sensor, und/oder eine Kamera sowie zumindest eine Schnittstelle zur Steuerung des Heizelements und/oder Kühlelements (5, 6).

14. Steuereinrichtung nach Anspruch 13, wobei die Steuereinrichtung Teil einer Generalsteuereinrichtung, insbesondere für eine Werkzeugmaschine, ist.

15. 3D-Druckkopf, aufweisend eine Vorrichtung nach einem der Ansprüche 8 bis 12.

16. 3D-Drucker, insbesondere 3D-Drucker als Teil einer Werkzeugmaschine, aufweisend eine Vorrichtung nach einem der Ansprüche 8 bis 12.

17. Werkzeugmaschine oder Produktionsmaschine, aufweisend eine Vorrichtung gemäß einem der Ansprüche 8 bis 12.
